# EUROPEAN PATENT SPECIFICATION

(11) **EP 2 432 092 B1**
(45) Date of publication and mention of the grant of the patent: **04.05.2016**
(21) Application number: 10774730.5
(22) Date of filing: 13.05.2010
(51) Int. Cl.: H02G 15/04, C09K 3/10, H01B 7/282, H01B 13/32, H02G 3/22

(54) **KIT FOR ELECTRICAL WIRE WATER-SEALING MATERIAL, ELECTRICAL WIRE WATER-SEALING MATERIAL, WATER-SEALING MEMBER, WATER-SEALED ELECTRICAL WIRE, AND WATER-SEALING METHOD**
KIT FÜR EIN MATERIAL ZUR WASSERABDICHTUNG VON ELEKTRODRÄHTEN, MATERIAL ZUR WASSERABDICHTUNG VON ELEKTRODRÄHTEN, WASSERABDICHTUNGSELEMENT, WASSERDICHTER ELEKTRODRAHT UND WASSERABDICHTUNGSVERFAHREN
KIT POUR MATÉRIAU D'ÉTANCHÉITÉ DE FIL ÉLECTRIQUE, MATÉRIAU D'ÉTANCHÉITÉ DE FIL ÉLECTRIQUE, ÉLÉMENT D'ÉTANCHÉITÉ, FIL ÉLECTRIQUE ÉTANCHE, ET PROCÉDÉ D'ÉTANCHÉITÉ

(30) Priority: 13.05.2009 JP 2009116213; 27.10.2009 JP 2009246557
(43) Date of publication of application: 21.03.2012
(73) Proprietor: JSR Corporation, Minato-ku Tokyo 105-8640 (JP)
(72) Inventor: YAMAGUCHI, Hiroshi, Tokyo 105-8640 (JP); TAKASE, Katsuyuki, Tokyo 105-8640 (JP); KONDOU, Kazuyuki, Tokyo 105-8640 (JP); KUROSAWA, Takahiko, Tokyo 105-8640 (JP)
(74) Representative: TBK
(86) International application number: PCT/JP2010/003247
(87) International publication number: WO 2010/131471

(56) References cited:
- EP-A1- 1 698 664
- WO-A1-2005/061615
- WO-A1-2008/045295
- WO-A1-2008/146853
- WO-A2-01/58971
- GB-A- 2 381 495
- JP-A- 4 506 822
- JP-A- 7 228 860
- JP-A- H07 228 860
- JP-A- 2001 163 931
- JP-A- 2001 354 947
- JP-A- 2002 338 946
- JP-A- 2003 165 806
- JP-A- 2004 083 865
- JP-A- 2005 139 461
- JP-A- 2005 139 461
- JP-A- 2006 274 194
- JP-A- 2008 031 189
- JP-B2- 3 552 324
- US-A1- 2008 051 517

## Description

### FIELD OF THE INVENTION

The present invention relates to a water-sealing material for electrical wire, a water-sealing member, a water-sealed electrical wire, and a water-sealing method, to be used in, for example, an insulated electrical wire, cable, especially for telephone cable, inter and intra connection wire for electronic appliance, a wire harness for automobile or aircraft.

### BACKGROUND OF THE INVENTION

For producing an electrical wire, a telephone cable, inter and intra connection wires for electronic appliance , a wire harness for automobile or aircraft, and the like, an insulated electric wire which is composed of a conductor such as copper wire and aluminum wire which are excellent in electric performance and transmission performance, and a coating layer for covering the conductor such as polyvinyl chloride (PVC) or polyethylene (PE) is mainly used. In a lead wire for television set, for example, PE coating, or the same covered with a rubber on its outside sheath is widely used. For coating of wire harness for automobile or the like, for example, PVC, polyethylene terephthalate (PET), cross linked PE are widely used, and a cable in which plurality of insulated electric wires are bundled and a sheath (protective armor) made of an insulator is provided to its outside are also used (Patent Documents 1 to 4).

To electrically connect these insulated electrical wires (hereinafter referred to simply as "electrical wires") or cables with each other, it is necessary to expose the conductors by partially peeling the insulator such as the coating layer or sheath to form exposed parts of the conductor and connect the exposed parts of the conductors. Water may invade from outer environments into gaps between the conductor of the exposed parts and the coating layer thereof, and gaps between the plural electrical wires for composing the cables, thereby lowering the electrical conductivity or deteriorating the electrical wires and cables. To prevent invasion of water, therefore, water-sealing process is often applied. In the case of a wire harness for automobile or aircraft, application of water-sealing to wiring positions of electrical wires and cables connected according to the wiring pattern mounted on the automobile etc. , or exposed parts of the conductor at terminal ends, is required.

Typically, non-curing type water-absorbing resins, or thermosetting resins such as, for example, silicone grease are used as materials for water-sealing process for electrical wires and cables (hereinafter referred to as "electrical wire water-sealing materials") (Patent Documents 5 to 8). Another example is a water-sealing material for electrical wire comprising an ultraviolet curing type resin, which is essentially composed of 2-cyanoacrylate and multifunctional acrylate (Patent Document 9).

Document JPH07-228860, which is considered the closest prior art, discloses: a sealing material comprising the following components: (A) urethane (meth)acrylate; (B) a compound having at least one ethylenically unsaturated group; and either (C) a radiation polymerization initiator, or (D) an organic peroxide.

### Patent Document

Patent Document 1: JP-A-2001-312925 Patent Document 2: JP-A-2005-187595 Patent Document 3: JP-A-2006-348137 Patent Document 4: JP-A-2007-45952 Patent Document 5: JP-A-2008-123712
Patent Document 6: JP-A-2008-177171 Patent Document 7: JP-A-2008-078017 Patent Document 8: JP-A-H09-102222 Patent Document 9: WO2005/071793

### SUMMARY OF THE INVENTION

### Problems to be Solved by the Invention

However, conventional water-sealing materials for electrical wire made of non-curing materials are easily peeled and the water-sealing performance is lost, while water-sealing materials for electrical wire made of thermosetting resins require a long time for thermosetting process and the working efficiency of water-sealing process is lowered.
Accordingly, the object of the present invention is to provide a kit for preparing water-sealing material for an electrical wire and a water-sealing material for an electrical wire having a sufficient water-sealing performance and having an excellent usability for water-sealing process.

### Means for Solving the Problems

The present inventors attempted to develop water-sealing materials for electrical wire that may replace the conventional water-sealing materials for electrical wire composed of non-curing materials or thermosetting resins, and focused on and studied urethane (meth)acrylate radiation-curing resin compositions. As a result, the inventors found that a radiation-curing type water-sealing material for electrical wire having a sufficient water-sealing performance and a superior usability can be obtained by combining a urethane (meth)acrylate, a compound having one ethylenically unsaturated group, a radiation polymerization initiator, and a thermosetting organic peroxide, and thereby completed the invention.

The present invention provides a water-sealing material for electrical wire as defined in claim 1, a member as defined in claim 5, a wire as defined in claim 6, a cable as defined in claim 7 and a method as defined in claims 8 and 9. Further embodiments are set forth in the dependent claims.

### Effects of the Invention

By using a kit for preparing a water-sealing material an electrical wire or a water-sealing material for electrical wire of the present invention, which is a liquid composition of a low viscosity, gaps between plural copper wires and the like that are conductors, gaps between conductors and their coating layers, gaps between electrical wires of cables and sheaths, gaps between plural electrical wires, and the like can be easily filled with the water-sealing materials for electrical wire by capillary phenomenon, and an effective water-sealing is possible. Further, by combination of radiation curing by irradiation with radiation such as ultraviolet rays and thermosetting, gaps between plural copper wires and the like that are conductors, gaps between conductors and their coating layers, and the like can be effectively cured even in a region where radiation is not directly reached, so that an excellent water-sealing is easily carried out.

In addition, whereas the combination of radiation curing and thermosetting is employed, even when an promotor (E) of thermosetting reaction is not blended, an excellent curing ability and water-sealing property is obtained.

Further, the invention may also be used as a kit for adhesive agent or a kit for sealant, and may be used for adhesion treatment or sealing treatment which is excellent in dark part curing property.

### Detailed description of the Invention

The electrical wire water-sealing material of the present invention is realized in two types of embodiments of electrical wire water-sealing material (1) and electrical wire water-sealing material (2) as show below. The effects of the invention will be obtained in any one of the embodiments.

The component (A), a urethane (meth) acrylate, is produced by reaction of polyol, polyisocyanate, and (meth)acrylate containing a hydroxy group. That is, it is produced by reaction between an isocyanate group of polyisocyanate and a hydroxy group of polyol and a hydroxy group of (meth) acrylate containing a hydroxy group, respectively. Among the polyisocyanate, diisocyanate is preferred.

The reaction method includes, for example : batch reaction of polyol, polyisocyanate and (meth)acrylate containing a hydroxy group; a method of reaction of polyol with polyisocyanate, followed by reaction with (meth)acrylate containing a hydroxy group; a method of reaction of polyisocyanate with (meth) acrylate containing a hydroxy group, followed by reaction with polyol; a method of reaction of polyisocyanate with (meth) acrylate containing a hydroxy group, followed by reaction with polyol, and finally followed by a reaction with (meth)acrylate containing a hydroxy group.

The urethane (meth)acrylate of the component (A) may contain, as a part, a reaction product which contains no polyol and is obtained by reacting polyisocyanate and (meth) acrylate containing a hydroxy group.

The types of polymerization of each structural unit of polyol, which is preferably used herein, is not particularly limited, and may be any one of the random polymerization, block polymerization, and graft polymerization.

The polyol is a polyether polyol. Two or more types of polyol, for example, polyether polyol, polyester polyol, may be used in combination.

Examples of polyether polyol include polyols obtained by ring-opening polymerization from ion polymerizable cyclic compounds such as ethylene oxide, propylene oxide, butene-1-oxide, isobutene oxide, 3,3-bischloromethyl oxetane, tetrahydrofuran, 2-methyl tetrahydrofuran, 3-methyl tetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene mono-oxide, isoprene mono-oxide, vinyl oxetane, vinyl tetrahydrofuran, vinyl cyclohexene oxide, phenyl glycidyl ether, butyl glycidyl ether, and glycidyl ester benzoate. In this reaction, a copolymer composed of two or more ion polymerizable cyclic compounds may be used, and in this case, the type of polymerization of each structural unit used in the polyol is not particularly limited, and may be any one of the random polymerization, block polymerization, cross polymerization, and graft polymerization.

Examples of polyether polyol obtained by ring-opening polymerization of one type of the above ion polymerizable cyclic compounds include, for example, diols such as polyethylene glycol, polypropylene glycol, polytetramethylene glycol, polyhexamethylene glycol, polyheptamethylene glycol, and polydecamethylene glycol; triols such as polyethylene triol, polypropylene triol, and polytetramethylene triol; hexaols such as polyethylene hexaol, polypropylene hexaol, and polytetramethylene hexaol. Examples of polyether polyol obtained by ring-opening copolymerization of two or more ion polymerizable cyclic compounds described above include, for example, binary copolymers obtained by a combination such as tetrahydrofuran and propylene oxide, tetrahydrofuran and 2-methyl tetrahydrofuran, tetrahydrofuran and 3-methyl tetrahydrofuran, tetrahydrofuran and ethylene oxide, propylene oxide and ethylene oxide, and butene-1-oxide and ethylene oxide; ternary copolymers obtained by a combination such as tetrahydrofuran, butene-1-oxide, and ethylene oxide. These polyether polyols may be used either alone or in combination of two or more thereof.

Commercial products of the polyether polyol, for example, PTMG650, PTMG1000, andPTMG2000 (all manufactured by Mitsubishi Chemical Corporation) ; PPG400, PPG1000, EXCENOL720, 1020, and 2020 (all manufactured by Asahi-Olin Ltd.); PEPG1000, UNISAFEDC1100, and DC1800 (all manufactured by NOF Corporation); PPTG2000, PPTG1000, PTG400, and PTGL2000 (all manufactured by Hodogaya Chemical Co., Ltd.); Z-3001-4, Z-3001-5, PBG2000A, PBG2000B, EO/B04000, and EO/B02000 (all manufactured by Dai-ichi Kogyo Seiyaku Co., Ltd.) may be obtained.

Further the examples include alkylene oxide added diol of hydrogenated bisphenol A, alkylene oxide added diol of hydrogenated bisphenol F, and alkylene oxide added diol of 1,4-cyclohexane diol, which may be obtained as commercial products, for example, UNIOLDA400, DA700, DA1000, and DA4000 (all manufactured by NOF Corporation).

Among the polyether polyol compounds, polyether polyol having a polyether structure obtained by ring-opening polymerization of propylene oxide is preferred. Specific examples include polypropylene glycol, polypropylene triol, polypropylene hexaol, and binary copolymer of propylene oxide and tetrahydrofuran, propylene oxide and ethylene oxide, and propylene oxide and butylene oxide.

The polyester polyol is, for example, a polyester polyol obtained by reaction of dihydric alcohol and dibasic acid. Examples of the dihydric alcohol include, for example, ethylene glycol, polyethylene glycol, propylene glycol, polypropylene glycol, tetramethylene glycol, polytetramethylene glycol, 1,6-hexane polyol, neopentyl glycol, 1,4-cyclohexane dimethanol, 3-methyl-1,5-pentane polyol, 1,9-nonane polyol, 2-methyl-1,8-octane polyol. Examples of the dibasic acid include, for example, aromatic dicarboxylic acid such as phthalic acid, isophthalic acid, terephthalic acid; aliphatic dicarboxylic acid such as maleic acid, fumaric acid, adipic acid, and sebasic acid. The aliphatic dicarboxylic acid is preferably an alkane dicarboxylic acid, and the number of carbon atom of the alkane portion is preferably 2 to 20, particularly 2 to 14. The aromatic moiety of the aromatic dicarboxylic acid is preferably a phenyl group. These polyester polyols may be used either alone or in combination of two or more thereof.

Commercial products of the polyester polyol include, for example, KURARAY POLYOLP-2010, P-2020, P-2030, P-2050, PMIPA, PKA-A, KPA-A2, and PNA-2000 (all manufactured by Kuraray Co.,Ltd.); KYOWAPOL 2000PA, and 2000BA (both manufactured by Kyowa Hakko Kogyo Co.,Ltd.).

The number-average molecular weight of the polyol is preferably 400 to 3000, more preferably 1000 to 3000, and even more preferably 1500 to 2500. The number-average molecular weight is determined by gel permeation chromatography method (GPC method) based on the molecular weight of polystyrene.

Examples of polyisocyanate, especially diisocyanate, include, for example, 2,4-tolylene diisocyanate, 2,6-tolylene diisocyanate, 1,3-xylene diisocyanate, 1,4-xylene diisocyanate, 1,5-naphthalene diisocyanate, m-phenylene diisocyanate, p-phenylene diisocyanate, 3,3'-dimethyl-4,4'-diphenyl methane diisocyanate, 4,4'-diphenyl methane diisocyanate, 3,3'-dimethyl phenylene diisocyanate, 4,4'-biphenylene diisocyanate, 1,6-hexane diisocyanate, isophorone diisocyanate, methylene bis(4-cyclohexyl isocyanate), 2,2,4-trimethyl hexamethylene diisocyanate, bis(2-isocyanate ethyl) fumarate, 6-isopropyl-1,3-phenyl diisocyanate, 4-diphenyl propane diisocyanate, lysine diisocyanate, hydrogenated diphenyl methane diisocyanate, hydrogenated xylylene diisocyanate, tetramethyl xylylene diisocyanate, 2,5 (or 2,6)-bis(isocyanate methyl)-bicyclo[2,2,1] heptane. In particular, for example, 2,4-tolylene diisocyanate, isophorone diisocyanate, xylylene diisocyanate, and methylene bis(4-cyclohexyl isocyanate) are preferred. These polyisocyanates may be used either alone or in combination of two or more thereof.

Examples of (meth)acrylate containing a hydroxyl group include, for example, 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanepolyolmono (meth)acrylate, 2-hydroxyalkyl (meth)acryloyl phosphate, 4-hydroxycyclohexyl (meth) acrylate, 1,6-hexanepolyolmono (meth)acrylate, neopentyl glycolmono (meth)acrylate, trimethylol propane di(meth)acrylate, trimethylol ethane di(meth)acrylate, pentaerythritol tri(meth)acrylate, and dipentaerythritol penta(meth)acrylate. These (meth)acrylates containing a hydrogen group may be used either alone or in combination of two or more thereof.

Further, the compounds obtained from addition reaction of compounds containing a glycidyl group, such as alkyl glycidyl ether, allyl glycidyl ether, or glycidyl (meth)acrylate, and a (meth) acrylic acid may be used. Among these meth (acrylates) containing a hydroxy group, in particular, for example, 2-hydroxyethyl (meth)acrylate and 2-hydroxypropyl (meth)acrylate are preferred.

These (meth)acrylate compounds containing a hydroxy group may be used either alone or in combination of two or more thereof.

The blending ratio of polyester polyol, polyisocyanate, and (meth)acrylate containing a hydroxy group is preferably, with respect to 1 equivalent of hydroxy group contained in polyester polyol, the isocyanate group contained in the polyisocyanate is 1.1 to 3 equivalents, and the hydroxy group in the (meth) acrylate containing a hydroxy group is 0.2 to 1.5 equivalents.

In the reaction of these compounds, 0.01 to 1 part by mass of an urethane forming catalyst such as, for example, copper naphthanate, cobalt naphthanate, zinc naphthanate, dibutyl tin dilaurate, triethylamine, 1,4-diazabicyclo [2.2.2] octane, and 2,6,7-trimethyl-1,4-diazabicyclo [2,2,2] octane is added, based on 100 parts by mass of the total amount of the reaction product. The reaction temperature is usually 10 to 90°C, preferably 30 to 80°C.

Blending ratio of the urethane (meth) acrylate of the compound (A) is 5 to 50% by mass, preferably 10 to 40% by mass, based on 100% by mass of the total amount of the electrical wire water-sealing material, from the viewpoint of the relation between viscosity of the composition and mechanical characteristics of the cured composition. When the blending amount of the compound (A) is within this range, low viscosity of the composition can be maitained, and therefore the water-sealing material for electrical wire easily enters, by capillary phenomenon, into gaps among plural conductive copper wires; gaps between conductors and the coating layers thereof; gap between electrical wires of cable and the sheath; gaps among plural electrical wires, in order to provide effective water-sealing performance.

The compound having one ethylenically unsaturated group, the component (B), is a radical polymerizable monofunctional compound. By using this compound as the component (B), excessive increase of the Young' s modulus of the cured compound is prevented, and an effective water-sealing performance is provided.

Specific examples of the component (B) include, for example, lactams containing a vinyl group such as N-vinyl pyrrolidone, and N-vinyl caprolactone, (meth)acrylates containing a alicyclic structure such as isobornyl (meth)acrylate, bornyl (meth)acrylate, tricyclodecanyl (meth)acrylate, dicyclopentanyl (meth)acrylate, dicyclopentenyl (meth)acrylate, and dicyclohexyl (meth)acrylate, benzyl (meth)acrylate, 4-butyl cyclohexyl (meth)acrylate, (meth)acryloyl morpholine, vinyl imidazole, and vinyl pyridine. Further examples include 2-hydroxyethyl (meth)acrylate, 2-hydroxypropyl (meth)acrylate, 4-hydroxydibutyl (meth)acrylate, methyl (meth)acrylate, ethyl (meth)acrylate, propyl (meth)acrylate, isopropyl (meth)acrylate, octyl (meth)acrylate, iso-octyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, polyethylene glycolmono (meth)acrylate, polypropylene glycolmono (meth)acrylate, methoxy ethylene glycol (meth)acrylate, ethoxy ethyl (meth)acrylate, methoxy polyethylene glycol (meth)acrylate, methoxy polypropylene glycol (meth)acrylate, polyoxyethylene nonyl phenyl ether acrylate, diacetone (meth)acrylamide, isobutoxymethyl (meth)acrylamide, N,N-dimethyl (meth)acrylamide, t-octyl (meth)acrylamide, dimethyl aminoethyl (meth)acrylate, diethylaminoethyl (meth)acrylate, 7-amino-3,7-dimethyloctyl (meth)acrylate, N-N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether. These compounds may be used either alone or in combination of two or more thereof.

Commercial products of the component (B) include, for example, ARONICS M111, M113, M114, and M117 (all manufactured by Toa Gosei Co., Ltd); KAYARAD , TC110S, R629, and R644 (all manufactured by Nippon Kayaku Co., Ltd); and IBXA and Biscoat 3700 (both manufactured by Osaka Organic Chemical Industry Ltd.).

Among these components (B), in order to improve solubility of component (E), a component with a high polarity is preferred, and specific examples include, for example, lactams containing a vinyl group such as N-vinyl pyrrolidone, and N-vinyl caprolactam, acryloyl morpholine, dimethyl aminoethyl (meth)acrylate, N, N-dimethyl aminopropyl (meth)acrylamide, hydroxyethyl (meth)acrylate, hydroxypropyl (meth) acrylate. In addition, preferred examples include, for example, isobornyl acrylate, polyoxyethylene nonyl phenyl ether acrylate, 2-ethylhexyl acrylate.

The compound having one ethylenically unsaturated group (B) prevents excessive increase of the viscosity of the water-sealing material for electrical wire from, and prevents decrease of the mechanical characteristics of the cured product (water-sealing member), in particular, the breaking elongation, Therefore, 30 to 90% by mass, preferably 40 to 80% by mass, or more preferably 45 to 75% by mass of the compound, based on 100% by mass of the total amount of the water-sealing material for electrical wire, is blended.

The radiation polymerization initiator, the compound (C), is not particularly limited so long as the compound absorb radiation and initiate radical polymerization. Specific examples of the compound include, for example, 1-hydroxy cyclohexyl phenyl ketone, 2,2-dimethoxy-2-phenyl acetophenone, xanthone, fluorenone, benzaldehyde, fluorene, anthraquinone, triphenylamine, carbazole, 3-methyl acetophene, 4-chlorobenzophenone, 4,4'-dimethoxy benzophenone, 4,4'-diaminobenzophenone, Michler's ketone, benzo-isopropyl ether, benzoin ethyl ether, benzyl dimethyl ketal, 1-(4-isopropyl phenyl)-2-hydroxy-2-methyl propane-1-on, 2-hydroxy-2-methyl-1-phenyl propane-1-on, thioxanthone, diethyl thioxanthone, 2-isoropyl thioxanthone, 2-chlorothioxathone, 2-methyl-1-[4-(methyl thio) phenyl]-2-morpholino-propane-1-on, 2, 4, 6-trimethyl benzoyl diphenyl phosphine oxide, bis-(2,6-dimethoxybenzoyl)-2, 4, 4-trimethyl pentyl phophphine oxide. These compounds may be used either alone or in combination of two or more thereof.

Commercial products of the radiation polymerization initiator (C) include, for example, IRGACURE 184, 369, 651, 500, 907, CGI 1700, CGI 1750, CGI 1850, CG 24-61; Darocure 1116, and 1173 (all manufactured by Ciba Specialty Chemicals Inc.); Lucirin TPO (by BASF); Ubecril P36 (manufactured by UCB). Examples of a photosensitizer include, for example, triethylamine, diethylamine, N-methyl diethanolamine, ethanolamine, 4-dimethyl aminobenzoate, 4-dimethyl amino methyl benzoate, 4-dimethyl amino ethyl benzoate, 4-dimethyl amino isoamyl benzoate; Ubecril P102, 103, 104, and 105 (all manufactured by UCB).

The radiation polymerization initiator of the compound (C) is preferably blended by 0.01 to 10% by mass, more preferably by 0.1 to 10% by mass, and even more preferably by 0.3 to 5% by mass, based on 100% by mass of the whole amount of the electrical wire water-sealing material.

The organic peroxide of the component (D) is a radical polymerization initiator for thermosetting reaction, and its specific examples include, for example, cumene hydroperoxide, tertiary butyl peroxide, methyl aceto-acetate peroxide, methyl cyclohexane peroxide, diisopropyl peroxide, dicumyl peroxide, diisopropyl peroxy carbonate, benzoyl peroxide, tertiary butyl peroxy neodecanoate. These compounds may be used either alone or in combination of two or more thereof.

The organic peroxide (D) is preferably blended by 0. 1 to 5% by mass, especially 0.3 to 2% by mass, based on 100% by mass of the whole amount of the electrical wire water-sealing material. When the blending amount of the compound (D) is within this range, the thermosetting reaction performance is favorable, therefore, the dark part curing performance is enhanced, and an effective water-sealing process is possible.

The polymerization promotor of the component (E) is a component for promoting the decomposition of the component (D) and promoting the thermosetting reaction together with the component (D). Specific examples of the component (E) are not particularly limited, include, for example, thio urea derivatives such as diethyl thio urea, dibutyl thio urea, ethylene thio urea, tetramethyl thio urea, 2-mercaptobenzimidazole compound, and benzyl thio urea, or their salts; amines such as N, N-diethyl-p-toluidine, N, N-dimethyl-p-toluidine, N, N-diisopropanol-p-toluidine, triethylamine, tripropylamine, ethyl diethanolamine, N, N-dimethyl aniline, ethylene diamine and triethanolamine; metal salts of organic acids such as cobalt naphthanate, copper naphthanate, zinc naphthanate, cobalt octanate, and iron octylate; organic metal chelate compounds such as copper acetyl acetonate, titanium acetyl acetonate, manganese acetyl acetonate, chromium acetyl acetonate, iron acetyl acetonate, vanadyl acetyl acetonate, and cobalt acetyl acetonate. These compounds may be used either alone or in combination of two or more thereof.

Among them, 2-mercaptobenzimidazole compound is preferred, and a polymerization promotor composed of a divalent copper compound and 2-mercaptobenzimidazole compound is more preferred. Examples of the divalent copper compound include cupric carbonate such as cupric acetate, cupric tartrate, cupric oleate, cupric octylate, and cupric naphthanate; divalent copper β-diketone compound such as cupric acetyl acetonate, and cupric benzoyl acetonate; divalent copper β-ketoester compound such as cupric acetoacetate; divalent copper alkoxide compound such as cupric 2-(2-butoxy ethoxy) ethoxide, and cupric 2-(2-methoxy ethoxy) ethoxide. Further, a salt of copper and inorganic acid such as cupric nitrate and cupric chloride may be used. Examples of the 2-mercaptobenzimidazole compound include, besides 2-mercaptobenzimidazole, 2-mercaptoalkyl benzimidazoles such as 2-mercaptomethyl benzimidazole, 2-mercaptoethyl benzimidazole, 2-mercaptopropyl benzimidazole, and 2-mercaptobutyl benzimidazole; and 2-mercaptoalkoxy benzimidazoles such as 2-mercaptomethoxy benzimidazole, 2-mercaptoethoxy benzimidazole, 2-mercaptopropoxy benzimidazole, 2-mercaptobutoxy benzimidazole.

The component (E), which may be used in addition, is obtained by mixing 2 moles of alkali
metal salt of 2-mercaptobenzimidazole compound and 1 mole of divalent copper salt. The divalent copper compound and the 2-mercaptobenzimidazole compound are estimated to form a complex in the composition, and the complex structure is estimated to be a compound as represented by Chemical formula (1) below (copper di-2-mercaptomethyl benzimidazolate) in the case of, for example, the divalent copper compound and the 2-mercaptomethyl benzimidazole.

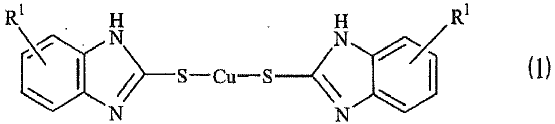

### [The Chemical formula (1), wherein R¹ is independently an alkyl group or an alkoxy group with 1 to 4 hydrogen atoms or carbon atoms.]

The component (E) is preferably blended by 0.01 to 0.5% by mass, especially 0.05 to 0.3% by mass, based on 100% by mass of the whole amount of the electrical wire water-sealing material. When the blending amount of the component (E) is within this range, the thermosetting reaction performance is favorable, and the dark part curing performance is enhanced, and an effective water-sealing process is possible.

In the electrical wire water-sealing material of the invention, various additives may be blended as needed so long as the characteristics of the invention are maitained. The various additives, for example, include, for example, antioxidant, coloring matter, ultraviolet absorber, photo stabilizer, silane coupling agent, thermal polymerization inhibitor, leveling agent, surface active agent, storage stabilizer, plasticizer, lubricant, solvent, filler, anti-aging agent, wetting improver, coat surface improver.

A component (F), which is a compound having two or more ethylenically unsaturated groups other than compound (A), may be contained. Such compound is a polymerizable multifunctional compound other than urethane (meth)acrylate. However, if a large amount of the component (F) is added, the Young's modulus of the cured product may be excessive, and an effective water-sealing performance may not be obtained. Therefore, the blending amount of the component (F) is 0 to 10% by mass, or more preferably 0 to 5% by mass, based on 100% by mass of the whole amount of the composition. In particular, preferably the component (F) should not be blended at all.

The component (F) is not particularly limited, examples include, for example, trimethylol propane tri(meth)acrylate, trimethylol propane trioxy ethyl(meth)acrylate, pentaerythritol tri(meth)acrylate, triethylene glycol diacrylate, tetraethylene glycol di(meth)acrylate, tricyclodecane dimethylol diacrylate, 1,4-butane polyol di(meth)acrylate, 1,6-hexane polyol di(meth)acrylate, neopentyl glycol di(meth)acrylate, tripropylene glycol di(meth)acrylate, neopentyl glycol di(meth)acrylate, bisphenol A diglycidyl ether having (meth)acrylic acid added to both terminals thereof, pentaerythritol tri(meth)acrylate, pentaerythritol tetra(meth)acrylate, polyester di(meth)acrylate, tris (2-hydroxyethyl) isocyanurate tri(meth)acrylate, tris (2-hydroxyethyl) isocyanurate di(meth)acrylate, tricyclodacane dimethylol diacrylate, di(meth)acrylate of polyol of adduct of ethylene oxide or propylene oxide of bisphenol A, di (meth) acrylate of polyol of adduct of ethylene oxide or propylene oxide of hydrogenated bisphenol A, epoxy (meth) acrylate having (meth) acrylate added to diglycidyl ether of bisphenol A, triethylene glycol divinyl ether. These compounds may be used either alone or in combination of two or more thereof.

As optional compounds, a component (G) may be contained, which is a compound having a structure as shown in Chemical formula (2) below. By adding the component (G), an excellent curing performance is provided even to a region of the water-sealing material for electrical wire where the region is overwrapped with, for example, a conductor and the radiation for curing does not directly reach.

Further specific components of the component (G) include the compounds represented by Chemical formulae (2-1) to (2-8) below.

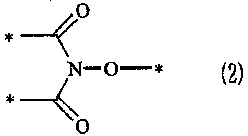

### [In the Chemical formula (2), "*" indicates a coupling hand.]

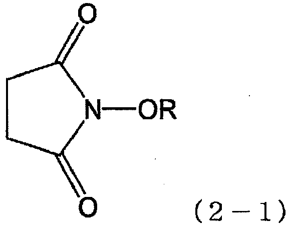

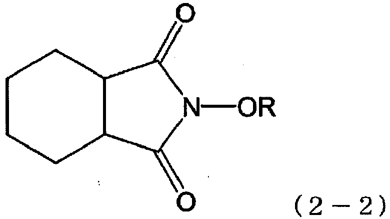

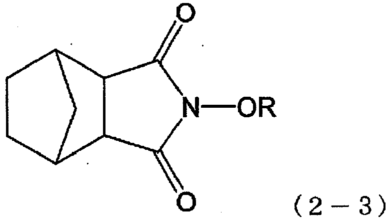

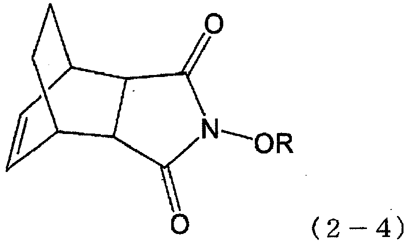

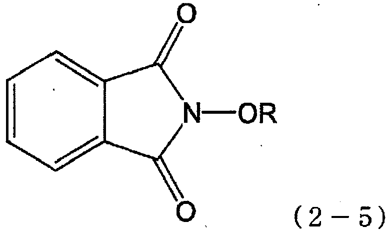

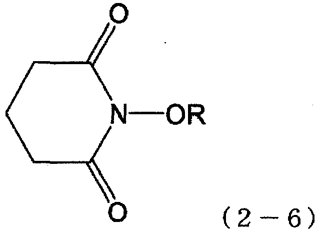

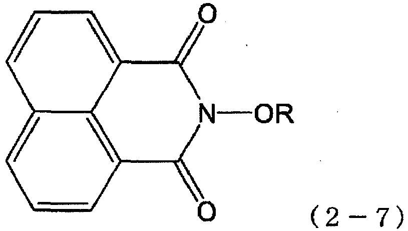

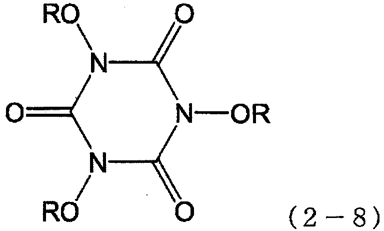

[In the Chemical formulae (2-1) to (2-8), R is independently hydrogen atom, a secondary or tertiary alkyl group having 3 to 30 carbon atoms, a cyclic alkyl group having 5 to 12 carbon atoms, an allyl group, an aralkyl group having 7 to 30 carbon atoms, or an acyl group having 2 to 30 carbon atoms. Examples of the secondary or tertiary alkyl group having 3 to 30 carbon atoms represented by R include, for example, an isopropyl group, a 2-butyl group, a t-butyl group, a 2-pentyl group, a t-pentyl group; the cyclic alkyl group having 5 to 12 carbon atoms includes, for example, a cyclopentyl group, a cyclohexyl group, a cyclododecyl group; the aralkyl group having 7 to 30 carbon atoms includes, for example, a benzyl group, an α-methyl benzyl group, a cinnamyl group; the acyl group having 2 to 30 carbon atoms includes, for example, an acetyl group, a propionyl group, a butylyl group, a benzoyl group, an acetyl-acetyl group (an acetonyl carbonyl group), a cyclohexyl carbonyl group, an acryloyl group, a methoxy carbonyl group, a benzyl oxy carbonyl group. In the formula, R is preferably a hydrogen atom, an acetyl group, a benzoyl group, an allyl group, a benzyl group or a t-butyl group.]

The component (G) optionally contained in the water-sealing material for electrical wire of the invention is preferably a compound expressed in the Chemical formulae (2-1) to (2-8), and preferable examples include N-hydroxy succinic acid imide, N-hydroxy-5-norbornene-2, 3-dicarboxy imide, N-hydroxy phthalimide, N-acetoxy phthalimide, N-benzoxy phthalimide, N-hydroxy-1, 8-naphthalimide, or trihydroxy imide cyanuric acid, and in particular N-hydroxy succinic acid imide, N-hydroxy phthalimide, N-acetoxy phthalimide, N-hydroxy-1, 8-naphthalimide, or trihydroxy imide cyanuric acid are preferred.

In the water-sealing material for electrical wire of the invention, the compound (G) may be used either alone or in combination of two or more thereof.

The component (G) in the composition of the invention is blended by 0.01 to 10% by mass, preferably by 0.1 to 5% by mass, and more preferably 1 to 3% by mass, based on 100% by mass of the whole amount of the composition. When the blending amount of the component (G) is in a range of 0.01 to 10% by mass, an excellent curing performance is obtained even in a overlapped area of the wiring or the like.

The viscosity of the water-sealing material for electrical wire of the invention at 25°C is 5 to 900 mPa·s, preferably 3 to 300 mPa·s. When the viscosity is in this range, the water-sealing material for electrical wire shows an effective water-sealing performance because it is easier to be infiltrated by the capillary phenomenon into gaps among conductors which is, for example, plural copper wires, gaps between conductor and the coating layer thereof, gaps between the electrical wires and the sheath in cable, or gaps among plural electrical wires. The viscosity is a value at 25°C measured by type B viscometer.

### 2. Kit for preparing water-sealing material for electrical wire

A kit for water-sealing material for electrical wire of the invention comprises the following two compositions (I) and (II). By mixing these two compositions at an arbitrary volume ratio, the water-sealing material for electrical wire (1) is prepared. The component (D) and the component (E) which promptly promote the thermosetting reaction at room temperature when mixed together, are preferred not to be added until immediately before use in the water-sealing process, from the viewpoint of the storage stability of the water-sealing material for electrical wire (1), therefore, the component (D) and (E) are preliminarily separated each other in the kit.
Composition (I) : a liquid composition containing one or more components selected from the components (A), (B) and (C), and containing the component (D), but not containing the component (E).
Composition (II) : a liquid composition containing one or more components selected from the components (A), (B) and (C), and containing the component (E), but not containing the component (D).

The each components and other arbitrary components used in the composition (I) and/or (II) are as above-described in the composition of the water-sealing material for electrical wire (1). However, the components (A) to (C) and other optional components of the composition (I) may be the same as the compounds of the components of the composition (II), or may be composed of different compounds.

The individual components and other optional components used in the composition (I) and the composition (II) are not particularly limited so long as the water-sealing material for electrical wire (1) is prepared by mixing these two compositions at an arbitrary volume ratio. Therefore, the blending amount of the components (A), (B) and (C) and other optional components of the composition (I) and (II) may be the same or different from each other. These components may be blended in both of the composition (I) and the composition (II), or in either one only.

The composition (I) and the composition (II) are both preferred to contain the component (A) by 5 to 50% by mass, the component (B) by 30 to 90% by mass, and the component (C) by 0.01 to 10% by mass. By controlling the amount of these components within the specified ranges, the viscosity and the specific gravity may be easily adjusted within an appropriate range as descried below.

The viscosity of both the composition (I) and the composition (II) at 25°C is 5 to 900 mPa·s, or preferably 3 to 300 mPa·s. When the viscosity is in this range, the water-sealing material for electrical wire (1) shows an effective water-sealing performance because it is easier to be infiltrated by the capillary phenomenon into gaps among conductors which is, for example, plural copper wires, gaps between conductor and the coating layer thereof, gaps between the electrical wires and the sheath of cable, or gaps among plural electrical wires. The viscosity is a value of the viscosity at 25°C measured by type B viscometer.

The viscosity of the composition (I) and the composition (II) is preferred to be close to each other, from the viewpoint of forming the water-sealing material for electrical wire (1) by uniformly mixing these compositions. Specifically, the ratio of the viscosity of the composition (I) and the viscosity of the composition (I) at 25°C is preferably 0.5 to 2.0, or more preferably 0.8 to 1.2.

The volume ratio for mixing the composition (I) and the composition (II), when preparing the water-sealing material for electrical wire (1), is not particularly limited, may be determined arbitrarily. From the viewpoint of convenience for use, the ratio of composition (I): composition (II) is preferably 10 to 90: 90 to 10, more preferably 30 to 70: 70 to 30, even more preferably 40 to 60 : 60 to 40, even more preferably 50: 50.

Since the water-sealing material for electrical wire (1) of the invention contains the radiation polymerization initiator (component (C)) and promoter for thermosetting reaction (component (D) and component (E)), a more effective water-sealing performance may be obtained by combination of radiation curing and thermal curing. Specific curing condition of the water-sealing material for electrical wire (1) of the invention is, curing by irradiation at energy density of 0.1 to 5 J/m2 for about 1 second to 60 seconds in air atmosphere of inert gas (e.g. nitrogen) atmosphere. The curing temperature is preferably 10 to 40°C, usually room temperature. The radiation herein includes, for example, infrared ray, visible ray, ultraviolet ray, X-ray, electron beam, alpha ray, beta ray, gamma ray.

### 3. Water-sealing material for electrical wire (2)

The water-sealing material for electrical wire (2) of the invention is a liquid curing composition as defined in claim 1 and comprising the
following components (A) to (D):
(A) 5 to 50% by mass of a urethane (meth)acrylate;
(B) 30 to 90% by mass of a compound having one ethylenically unsaturated group;
(C) 0.01 to 10% by mass of a radiation polymerization initiator; and
(D) 0.1 to 5% by mass of an organic peroxide;
based on 100% by mass of the whole volume of the composition.

A urethane (meth) acrylate, component (A), is prepared by reaction of polyol, polyisocyanate, and (meth)acrylate containing a hydroxy group.

These components may be the same as the above-mentioned electrical wire water-sealing material (1).

The polyol is a polyether polyol.

Besides, for example, polyether polyol, polyester polyol, may be used in combination of two or more thereof.

The components (B) to (D), and the other optional components may be the same as the above-mentioned electrical wire water-sealing material (1).

The contents of the components (A) to (D) may also be the same as the above-mentioned electrical wire water-sealing material (1).

The water-sealing material for electrical wire (2) of the invention has favorable curing performance and water-sealing performance without blending the component (E) that is used in the water-sealing material for electrical wire (1), and from the viewpoint of promoting the curing reaction, the component
(E) may not be required. On the other hand, when the component
(D) is used together with the component (E), the thermosetting reaction may be promoted before starting the water-sealing process, therefore, the blending amount of the component (E) is preferable to be as low as possible, or the component (E) is preferably blended immediately before the water-sealing process.

### 4. Water-sealing member, water-sealed electrical wire and cable

The water-sealing member of the invention is a cured product obtained by curing the above-mentioned water-sealing material for electrical wire (1) or (2). The water-sealing member is typically a member used in permanent water-sealing process, and therefore is required to have enough ability to resist peeling off or breaking by, for example, external physical force, changes of temperature. In particular, if the water-sealing member is excessively stiff, since the conductors of electrical wires and their coating members for composing the region that is subjected to water-sealing process, and the electrical wires and the sheath of cables has relatively high flexibility, when external physical force is applied, the water-sealing member may be easily peeled off or may be broken due to the concentration of stresses. More specifically, the Young's modulus of the water-sealing member is 50 to 1,000 MPa, or more preferably 100 to 500 MPa. The breaking strength is 1 to 50 MPa, or more preferably 10 to 30 MPa. The breaking elongation is 50 to 300%, or more preferably 80 to 200%. In addition, because of these reasons, high adhesion between the materials for composing the conductors, the coating material and the like should be required. Specifically, the adhesion strength of the water-sealing member with the copper or polyvinyl chloride is preferably 100 N/m or more, or more preferably 500 N/m or more.

The shape of the water-sealing member is not particularly limited, and may be formed in an arbitrary shape depending on the water-sealing method as described below.

### 5. Water-sealing method of electrical wire and cable

The region for application of water-sealing process in electrical wire and cable is not particularly limited, typically the treatment is performed to exposed parts of conductor at electrical connections of plural electrical wires and cables, and ends of electrical wires and cables. In some cases, a temporary water-sealing process in which plural electrical wires and cables are preliminarily connected in a certain wiring pattern is appliedbefore the ends of the connected electrical wires or cables are electrically connected to other members or products.

The water-sealing method of the invention is classified as follows, depending on whether the water sealing is applied to electrical wire or cable. (1-1) A method for water-sealing of exposed parts of conductor where a part of the coating material is removed from an electrical wire comprising a conductor and a coating material for coating the same. The method comprises:
a step of preparing water-sealing material wherein a water-sealing material (1) is prepared by mixing a composition (I) and a composition (II) which are the components of the kit for preparing water-sealing material for electrical wire at an arbitrary volume ratio,
a step of adhering water-sealing material wherein the water-sealing material for electrical wire (1) is applied to the exposed parts of conductor,
and a step of curing the water-sealing material by irradiation of the adhered region of the water-sealing material for electrical wire (1) on the electrical wire.
   (1-2) A method for water-sealing of exposed parts of conductor where a part of the coating material is removed from an electrical wire comprising a conductor and a coating material for coating the same. The method comprises:
      a step of adhering water-sealing material wherein an sealing material for electrical wire (2) is applied to the exposed parts of conductor,
      and a step of curing water-sealing material by irradiation of the adhered region of the water-sealing material for electrical wire (2) on the electrical wire.
   (2-1) A method for water-sealing of gaps among plural electrical wires in a cable comprising plural electrical wires each having a conductor and a coating material for coating the conductor The method comprising:
      a step of preparing water-sealing material wherein a water-sealing material (1) is prepared by mixing a composition (I) and a composition (II) which are the components of the kit for preparing water-sealing material for electrical wire at an arbitrary volume ratio,
      a step of filling the water-sealing material wherein the gaps among the electrical wires are filled with the water-sealing material for electrical wire (1),
      and a step of curing the water-sealing material by irradiation of the filled region of the water-sealing material for electrical wire (1) of the cable.
   (2-2) A method for water-sealing of gaps among plural electrical wires in a cable comprising plural electrical wires each having a conductor and a coating material for coating the same. The method comprises:
      a step of filling water-sealing material wherein the gaps among the electrical wires is filled with an electrical wire water-sealing material (2),
      and a step of curing the water-sealing material by irradiation of the filled region of the water-sealing material for electrical wire (2) of the cable.

The step of preparing the water-sealing material is a step of preparing a uniform composition by mixing the composition (I) and the composition (II) which are the components of the kit for preparing the water-sealing material for electrical wire at an arbitrary volume ratio. Usually, a static mixer or a two-liquid filling machine is used for preparation. Curing of the prepared water-sealing material for electrical wire (1) in thermosetting reaction is initiated immediately after the mixing of component (D) and component (E), therefore it is preferred to prepare immediately before the water-sealing process, specifically within 1 minute before the water-sealing process, or preferably within 30 seconds before the same.

The step of adhering of water-sealing material on electrical wires is a step of adhering the water-sealing material for electrical wire (1) or (2) to the exposed parts of the conductor that are subjected to water-sealing process. The adhering method is not particularly limited, and the exposed parts of conductor may be immersed in the water-sealing material for electrical wire, or the water-sealing material for electrical wire may be applied thereon. Alternatively, the water-sealing material for electrical wire may be pulled into the gap between the conductor and its coating layer from the exposed part of conductor by sucking from one end of the electrical wire. Herein, the exposed parts of conductor to be sealed may be the ends of each of the electrical wires or intermediate portions of the electrical wires.

The step of filling a cable with the water-sealing material is the same step as the above-mentioned step for adhering the water-sealing material on electrical wires, except that the exposed parts of conductor to be sealed are gaps among plural electrical wires composing the cable.

The step of curing the water-sealing material is a step of irradiation on the region where the water-sealing material for electrical wire (1) or (2) is filled, for curing the sealing material for electrical wire. The specific curing condition is the same as the above mentioned in relation to the water-sealing member.

The kit for preparing sealing material for electric wire and the sealing material for electric wire of the invention are useful as a water-sealing material for electric wire applied to an electrical wires such as, for example, telephone wire cable; relatively thin electric wires or cables such as automobile electric wire. By using the kit for preparing the sealing material for electric wire and the sealing material for electric wire of the invention in order for water-sealing according to the above water-sealing method, a uniform and strong water-sealing member which shows an effective water-sealing ability can be formed. The water-sealing member formed according to the invention shows an excellent strength, and shows a high adhesion strength to, for example, a conductor, a coating material, a sheath, and shows an effective water-sealing performance.

### 6. Adhesive agent

The adhesive agent of the invention is comprises the following two compositions (I) and (II). The adhesive agent is prepared by mixing these two compositions at an arbitrary volume ratio. The component (D) and the component (E), which promote the thermosetting reaction promptly at room temperature when mixed together, are preferably separated until immediately before the use in the adhering process, from the viewpoint of the storage stability, therefore, the component (D) and the component (E) are preliminarily separated in the kit.
Composition (I) : a liquid composition from the components (A), (B) and (C), and containing the component (D), but not containing the component (E).
Composition (II) : a liquid composition containing one or more components selected from the components (A), (B) and (C), and containing the component (E), but not containing the component (D).

The adhesive agent of the invention is a liquid curing composition containing the following components (A) to (D), based on 100% by mass of the whole amount of the composition.
(A) 5 to 50% by mass of a urethane (meth)acrylate;
(B) 30 to 90% by mass of a compound having one ethylenically unsaturated group;
(C) 0.01 to 10% by mass of a radiation polymerization initiator; and
(D) 0.1 to 5% by mass of an organic peroxide.

These components are the same as used in the water-sealing material for electrical wire, and can be used as the same.

The adhesive member of the invention is composed of a cured product obtained by curing this adhesive agent.

### 7. Sealant

The sealant of the invention is composed of the following two compositions (I) and (II). The sealant is prepared by mixing these two compositions at an arbitrary volume ratio. The component (D) and the component (E), which promote the thermosetting reaction promptly at room temperature when mixed together, are preferably separated until immediately before the use in the sealing process, from the viewpoint of the storage stability, therefore, the component (D) and the component (E) are preliminarily separated in the kit.
Composition (I) : a liquid composition containing one or more components selected from the components (A), (B) and (C), and containing the component (D), but not containing the component (E).
Composition (II) : a liquid composition containing one or more components selected from the components (A), (B) and (C), and containing the component (E), but not containing the component (D).

The sealant of the invention is a liquid curing composition containing the following components (A) to (D), based on 100% by mass of the whole amount of the composition.
(A) 5 to 50% by mass of a urethane (meth)acrylate;
(B) 30 to 90% by mass of a compound having one ethylenically unsaturated group;
(C) 0.01 to 10% by mass of a radiation polymerization initiator; and
(D) 0.1 to 5% by mass of an organic peroxide.

These components are the same as used in the water-sealing material for electrical wire, and can be used as the same.

The sealing member of the invention is composed of a cured product obtained by curing this sealant.

### EXAMPLES

The subject invention is more specifically described in below Examples, however, the subject invention should not be limited by these Examples.

### [Synthesis example 1: Synthesis 1 of (A) urethane (meth)acrylate]

In a reaction container equipped with an agitator, 190.51 g of 2,4-toluene diisocyanate, 268.4 g of isobornyl acrylate, 0.167 g of 2,6-di-t-butyl-p-cresol, 0.558 g of dilaurate dibutyl tin, and 0.056 g of phenothiazine were supplied, and cooled in ice until the liquid temperature was 10°C or less while stirring. In addition, 280.14 g of a ring-opening polymer of propylene oxide with the number-average molecular weight of 2000 was added, and the mixture was stirred for 2 hours to promote reaction while controlling the liquid temperature to be 35°C or less. Next, 47.78 g of hydroxypropyl alkylate was slowly added dropwise, and stirred for 1 hour while controlling the liquid temperature not exceeding 40°C, and 178.39 g of hydroxyethyl acrylate was added dropwise while controlling the temperature not exceeding 40°C, and after completion of dropping, stirring was continued for 3 hours at a liquid temperature of 70 to 75°C, and the reaction was terminated when the residual isocyanate was decreased to 0.1% by mass or less. The obtained (A) urethane (meth)acrylate is herein referred to as UA-1.

The UA-1 has a structure wherein 2-hydroxy ethyl acrylate is coupled to both terminal ends of propylene glycol by way of 2,4-trilene diisocyanate.

### [Synthesis example 2: Synthesis of urethane (meth)acrylate]

In a reaction container equipped with an agitator, 0.240 g of 2,6-di-t-butyl-p-cresol, 428.10 g of 2,4-trilene diisocyanate, and 0.799 g of dilaurate dibutyl tin were supplied, and cooled to 15°C while stirring. 570.86 g of hydroxyethyl acrylate was added dropwise while controlling the liquid temperature to be 20°C or less, and the mixture was stirred for 1 hour at 40°C in warm bath. After the increase of temperature being not confirmed, the stirring was continued for 3 hours at 65°C, and the reaction was terminated when the residual isocyanate was decreased to 0.1% by mass or less. The obtained urethane (meth)acrylate is herein referred to as UA-2.

The UA-2 has a structure having 2-hydroxy ethyl acrylate coupled to both terminal ends of 2,4-trilene diisocyanate.

### [Synthesis example 3: Synthesis of (A) urethane (meth) acrylate]

In a reaction container equipped with an agitator, 0.120 g of 2,6-di-t-butyl-p-cresol, 233.12 g of isobornyl acrylate, and 62.99 g of toluene diisocyanate were supplied, and cooled to 15°C while stirring. 42.00 g of hydroxyethyl acrylate was added dropwise while controlling the liquid temperature to be 20°C or less, and the mixture was stirred for 1 hour at 40°C in warm bath. Afterwards, 380.67 g of polyester diol with the number-average molecular weight of 2000 (poly [(3-methyl-1,5-pentadiol)-alt-(adipic acid)]: P-2010, manufactured by Kuraray Co., Ltd.)) was added, and stirred for 3 hours at 70°C, and the reaction was terminated when the residual isocyanate was decreased to 0.1% by mass or less. The obtained (A) urethane (meth)acrylate is referred to as UA-3.

### [Synthesis example 4: Synthesis of component (E)]

0.5 part by mass of a mineral spirit solution of cupric acetate (copper content 5.25%), and 0.5 part by mass of 2-mercaptomethyl benzimidazole, were mixed together to obtain E-1 as component (E).

The obtained component (E) was estimated to form a compound (copper mono-2-mercaptomethyl benzimidazolate) in which R1 of the Chemical formula (1) is a methyl group.

### [Preparation examples 1 to 4, Comparative preparation examples 1 to 6: Preparation of composition (I) and composition (II)]

The compositions as shown in Table 1 and Table 2 were supplied in a reaction container equipped with an agitator, and stirred at a liquid temperature of 50°C until a uniform solution was obtained, and the composition (I), the composition (II), or their comparative compositions were obtained.

The obtained compositions and the films obtained by curing each of the compositions were evaluated, and the measured physical properties are shown in Table 1 and Table 2. The blending amount of the components shown in Table 1 and Table 2 are indicated in parts by mass.

### Examples 1, 2 and Comparative examples 1 to 5

Each of the compositions shown in Table 3 were mixed at a ratio of 1:1 by volume using a static mixer, and the sealing material for electrical wire (1) was prepared.

### Text example 1

The compositions obtained in the above examples and comparative examples were cured by the following method to prepare test pieces, and the following properties were evaluated. The results are shown in Tables 1 to 3.

### 1. Viscosity:

The viscosity of each of the compositions was measured at 25°C by using a type B viscometer.

### 2. Young's modulus:

By using an applicator bar having a thickness of 200 µm, a water-sealing material for electrical wire was applied on a glass plate, and was cured in air by UV ray irradiation at an energy of 1 J/cm², and a film for measuring the Young's modulus was obtained. From this film, slip samples having 6 mm width of an extended portion and 25mm length were cut out, and tensile strength was measured at a temperature of 23°C and a humidity of 50%. The stretching speed was 1 mm/min, and the Young's modulus was calculated from the tensile strength at 2.5% distortion.

### 3. Breaking strength and breaking elongation:

Using a tensile tester (AGS-50G manufactured by Shimadzu Corporation), the breaking strength and the breaking elongation of the test pieces were measured under the following conditions.

| | |
|---|---|
| Stretching speed: | 50 mm/min |
| Inter-marker distance (measuring distance): | 25 mm |
| Measuring temperature: | 23°C |
| Relative humidity: | 50% RH |

### 4. Adhesive force on Copper plate :

The adhesive force of the cured product obtained from the compositions of the Examples and Comparative examples was measured. The liquid composition was applied on a copper plate by using a applicator having a thickness of 130 µm, and a cured film was obtained by UV ray irradiation at 1 J/cm² under a nitrogen atmosphere. This sample was left to stand for 24 hours at a temperature of 23°C and a humidity of 50%. From this cured film, a slip sample with 10 mm in width was prepared on a copper plate. The adhesive force of this sample was measured by using a tensile tester in accordance with JIS Z0237.

### 5. Adhesive force on PVC:

The adhesive force was measured similarly as in the case of measurement of adhesive force on copper plate , except that a polyvinyl chloride plate was used instead of a copper plate.

### 6. Dark part curing property:

In a transparent polyethylene container (1 to 3 mL), the composition (I) and the composition (II) were added at a ratio of 1:1 by volume, and mixed together by using a static mixer, and an electrical wire having an exposed conductor, from which the coating material at the end portion of the wire was removed, was inserted into the obtained mixture. Immediately after that, the electrical wire was irradiated with an ultraviolet ray for 5 seconds (800 W UV lamp manufactured by OAK Corporation) at room temperature under an air atmosphere, and a water-sealed electrical wire was prepared. After leaving for one day, the coating material of the water-sealed portion was removed to expose the conductor, and the degree of curing of the conductor portion was measured by the attenuated total reflectance infrared spectroscopic method (ATR-IR) (the degree of the resin liquid was defined as 0%; while the air side surface of 200 µm film cured under the condition of 500 mJ/cm², nitrogen atmosphere, was defined as 100%).

### 7. Degree of infiltration:

A water-sealed electrical wire was prepared in the same manner as above-mentioned evaluation of the dark part curing property, and the coating material at the water-sealing portion was removed to expose the conductor. The presence or absence of the resin component derived from the water sealing material for electrical wire, on this conductor, was evaluated visually and by ATR-IR. The length from the end of the coating material to the deepest position on the conductor where the resin component is infiltrated in the water-sealing process was defined as degree of infiltration.

**[Table 1]**

| (Parts by mass) | | | | | | |
|---|---|---|---|---|---|---|
| | | Preparation example 1 composition (I-1) | Preparation example 2 composition (I-2) | Comparative preparation example 1 composition (I-3) | Comparative preparation example 2 composition (I-4) | Comparative preparation example 3 composition (I-5) |
| (A) | UA-1 | 24.2 | 24.1 | 24.2 | 53.8 | 24.2 |
| | UA-2 | | | | 11.7 | |
| (B) | M-113 | | 8 | | | |
| | N-vinyl-2-pyrrolidone | | | | 9.8 | |
| | Isobornyl acrylate | 72.6 | 56.2 | 72.6 | 21.5 | 72.6 |
| | Acryloyl morpholine | | 8 | | | |
| | 2-ethyl hexyl acrylate | | | | | |
| (C) | TPO-X | 0.4 | 0.4 | 0.4 | 0.4 | |
| | Irg 184 | 1.5 | 1.5 | 1.5 | 1.5 | |
| Others | Irganox 245 | 0.3 | 0.3 | 0.3 | 0.3 | 0.3 |
| | PM-2 | | 0.5 | | | |
| (D) | CPO | 1 | 1 | | 1 | 1 |
| | Total | 100 | 100 | 99 | 100 | 98.1 |
| | Viscosity (mPa·s) at 25°C | 60 | 75 | 60 | 980 | ND |
| | Young's modulus (MPa) | 100 | 130 | 100 | 400 | ND |
| | Breaking strength (MPa) | 17 | 16 | 17 | 20 | ND |
| | Breaking elongation (%) | 140 | 120 | 140 | 60 | ND |

**[Table 2]**

| (Parts by mass) | | | | | | |
|---|---|---|---|---|---|---|
| | | Preparation example 3 composition (II-1) | Preparation example 4 composition (II-2) | Comparative preparation example 4 composition (II-3) | Comparative preparation example 5 composition (II-4) | Comparative preparation example 6 composition (II-5) |
| (A) | UA-1 | 28.8 | 24.4 | 28.8 | 50.9 | 28.8 |
| | UA-2 | | | | 14.2 | |
| (B) | M-113 | | 8.2 | | | |
| | N-vinyl-2-pyrrolidone | 28.8 | | 28.8 | | 28.8 |
| | Isobornyl acrylate | 35.5 | 57 | 35.4 | 32.6 | 35.5 |
| | Acryloyl morpholine | | 8.1 | | | |
| | 2-ethyl hexyl acrylate | 4.8 | | 4.8 | | 4.8 |
| (C) | TPO-X | 0.4 | 0.4 | 0.4 | 0.4 | |
| | Irg 184 | 1.4 | 1.5 | 1.4 | 1.5 | |
| Others | Irganox 245 | 0.3 | 0.3 | 0.3 | 0.3 | 0.3 |
| | PM-2 | | | | | |
| (E) | E-1 | 0.1 | 0.1 | | 0.1 | 0.1 |
| | Total | 100.1 | 100 | 99.9 | 100 | 98.3 |
| | Viscosity (mPa·s) at 25°C | 35 | 76 | 35 | 1020 | ND |
| | Young's modulus (MPa) | 420 | 150 | 420 | 410 | ND |
| | Breaking strength (MPa) | 17 | 15 | 17 | 20 | ND |
| | Breaking elongation (%) | 100 | 120 | 100 | 70 | ND |

**[Table 3]**

| (Parts by mass) | | | | | | | |
|---|---|---|---|---|---|---|---|
| | Example 1 | Example 2 | Comparative Example 1 | Comparative Example 2 | Comparative Example 3 | Comparative Example 4 | Comparative Example 5 |
| composition (I) | composition (1-1) | composition (1-2) | composition (1-3) | composition (I-1) | composition (1-3) | composition (1-4) | composition (I-5) |
| composition (II) | composition (II-1) | composition (II-2) | composition (II-1) | composition (II-3) | composition (II-3) | composition (II-4) | composition (II-5) |
| Young's modulus (MPa) | 410 | 390 | 450 | 420 | 460 | 400 | ND |
| Breaking strength (MPa) | 15 | 17 | 16 | 15 | 18 | 18 | ND |
| Breaking elongation (%) | 120 | 130 | 110 | 110 | 110 | 60 | ND |
| Adhesive force on Copper plate (N/m) | >500 | >500 | >500 | >500 | >500 | 100 | ND |
| Adhesive force on PVC (N/m) | >500 | >500 | >500 | >500 | >500 | >500 | ND |
| Dark part curing property (degree of curing) | 96% | 91% | 34% | 65% | 41% | 85% | 96% |
| Degree of infiltration (cm) | 12 | 11 | 13 | 12 | 12 | 4 | 11 |

In Tables 1 to 3,
M-113: Polyoxyethylene nonyl phenyl ether acrylate (ARONICS M-113 manufactured by Toa Gosei Co., Ltd).
TPO-X: 2,4,6-trimethyl benzoyl diphenyl phosphine oxide (manufactured by Ciba Specialty Chemicals Inc.).
Irgacure184: 1-hyroxy-cyclohexyl-phenyl-ketone (manufactured by Ciba Specialty Chemicals Inc.).
Irganox245: Ethylene bis(oxyethylene) bis[3-(5-tert-butyl-4-hydroxy-m-tolyl) propionate] (manufactured by Ciba Specialty Chemicals Inc.).
PM-2: A compound expressed in Chemical formula (3) (PM-2 manufactured by Nippon Kayaku Co., Ltd)

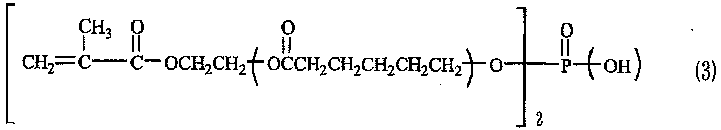

CPO: Cumene hydroperoxide (manufactured by NOF Corporation).
E-1: A compound (E) obtained in synthesis example 4.
ND: Not determined.

As apparent from Tables 1 to 3, the water-sealing materials for electrical wire prepared from the kit for preparing the water-sealing material for electrical wire of the subject invention show excellent properties as a water-sealing material electrical wire, and is cured within a short time by radiation curing, and is excellent in usability in the water-sealing process, and is hence useful as a water-sealing material for electrical wire. On the other hand, Comparative example 1, in which composition (I) does not contain component (D), and Comparative example 2, in which composition (II) does not contain component (E), showed inferior thermosetting property and insufficient dark part curing property. Comparative example 3 , in which both component (D) and component (E) were not contained, showed similar defects. Comparative example 4, in which an blending amount of component (A) was excessive, showed excessive viscosity in both compositions (I) and (II), and the viscosity of the water-sealing material for electrical wire (not shown in Table 3) was also excessive, and as a result, the capillary phenomenon was suppressed and the degree of infiltration was decreased, and the adhesive force on the copper plate was also inferior. Further, Comparative example 5, in which the photopolymerization initiator was not contained, could not be evaluated in the mechanical characteristics because cured films could not be obtained by each of the compositions (I) and (II) alone (Table 1, Table 2), and when the compositions (I) and (II) are mixed together, the curing property was too low, and a film for evaluation could not be obtained, and the properties could not be determined (Table 3).

### Examples 3 to 6 and Comparative example 6

Each of the compositions shown in Table 4 were supplied in a reaction container equipped with an agitator, and stirred at a liquid temperature of 50°C until a uniform solution was obtained, and the compositions of the Examples, i. e. the sealing material for electrical wire (2), and their comparative compositions were obtained. The blending amount of each of the components, as shown in Table 4, is expressed by parts by mass.

### Test example 2

The compositions of Examples 3 to 6 and Comparative example 6 were cured by the following method, and test pieces were prepared, and the viscosity, Young's modulus, breaking strength, breaking elongation, adhesive force on copper plate, adhesive force on PVC , and dark part curing property were evaluated in the same manner as in Examples 1 and 2, and the high-temperature durability was also evaluated. The results are shown together in Table 4.

### (High-temperature durability)

Test samples prepared for measurement of Young' s modulus, breaking strength, and breaking elongation were left stand at 120°C for 5 days, and these properties were measured in the same methods as described above. If the difference between these properties with and without 120°C treatments was smaller, the high-temperature durability can be said to be higher.

**[Table 4]**

| | | Example 3 | Example 4 | Example 5* | Example 6 | Comparative example 6 |
|---|---|---|---|---|---|---|
| (A) | UA-1 | 18.46 | 18.46 | - | 36.21 | 18.46 |
| | UA-2 | 17.75 | 17.75 | 36.21 | - | 17.75 |
| (B) | Isobornyl acrylate | 61.20 | 53.63 | 61.20 | 61.20 | 61.20 |
| | Acryloyl morpholine | | 7.60 | | | |
| (C) | TPO-X | 0.30 | 0.30 | 0.30 | 0.30 | 0.30 |
| | Irgacure184 | 1.12 | 1.12 | 1.12 | 1.12 | 1.12 |
| (D) | Cumene hydroperoxide | 1.00 | 1.00 | 1.00 | 1.00 | - |
| | Total | 99.83 | 99.86 | 99.83 | 99.83 | 98.83 |
| Viscosity (mPa·s) at 25°C | | 256 | 240 | 345 | 154 | 260 |
| Young's modulus (MPa) | | 110 | 150 | 240 | 70 | 240 |
| Breaking strength (MPa) | | 19 | 20 | 25 | 19 | 26 |
| Breaking elongation (%) | | 160 | 160 | 170 | 180 | 150 |
| Adhesive force on Copper plate (N/m) | | 110 | 140 | 280 | 13 | 50 |
| Adhesive force on PVC (N/m) | | 30 | 70 | 120 | 10 | 10 |
| Dark part curing property (degree of curing: %) | | 93 | 92 | 93 | 92 | 55 |
| Young's modulus (Mpa) at120°C for 5 days | | 200 | 230 | 270 | 210 | 300 |
| Breaking strength (MPa) at 120°C for 5 days | | 20 | 20 | 25 | 20 | 27 |
| Breaking elongation (%) at 120°C for 5 days | | 170 | 170 | 170 | 170 | 140 |

| | | | | | | |
|---|---|---|---|---|---|---|
| *** Reference Example** | | | | | | |

In Table 4,
TPO-X: 2.4.6-trimethyl benzoyl diphenyl phosphine oxide (manufactured by Ciba Specialty Chemicals Inc.).
Irgacure184: 1-hydroxy-cyclohexyl-phenyl-ketone (manufactured by Ciba Specialty Chemicals Inc.).

As apparent from Table 4, the water-sealing material for electrical wire of the subject invention showed, even if a portion of it is not directly exposed to radiation due to the existence of an overwrapped area by the metal wire of the conductor, a favorable curing property owing to the combined effects of the thermosetting reaction and the radiation curing **reaction, and the usability in water- sealing process was excellent. Reference Example 5 using only the reaction product of**
polyester polyol, polyisocyanate, and (meth)arylate containing a hydroxy group as the component (A) was particularly excellent in high-temperature durability. On the other hand, Comparative example 6, in which component (D) was not contained, was insufficient in dark part curing property.

Accordingly, the composition of the invention can be used as the electrical wire water-sealing **material.**

## Claims

1. A radiation-curing type water-sealing material for electrical wire, for water-sealing of
an exposed part of a conductor obtained by removing a part of coating material from an electrical wire comprising a conductor and the coating material for coating the conductor or
a gap between plural electrical wires in a cable comprising plural electrical wires each having a conductor and a coating material for coating the conductor,
comprising the following components (A) to (D):
(A) 5 to 50% by mass of a urethane (meth)acrylate containing a product obtained from reaction between polyether polyol, polyisocyanate, and (meth)acrylate containing a hydroxy group;
(B) 30 to 90% by mass of a compound having one ethylenically unsaturated group;
(C) 0.01 to 10% by mass of a radiation polymerization initiator,
(D) 0.1 to 5% by mass of an organic peroxide, and
(F) 10% by mass or less of a component (F) which is a compound having two or more ethylenically unsaturated groups other than the component (A),
based on 100% by mass of the whole volume of the composition.

2. The water-sealing material for electrical wire according to claim 1, wherein the component (D) is one or more members selected from the group consisting of cumene hydroperoxide, tertiary butyl peroxide, methyl aceto-acetate peroxide, methyl cyclohexanone peroxide, di-isopropyl peroxide, dicumyl peroxide, di-isopropyl peroxy carbonate, benzoyl peroxide, and tertiary butyl peroxy neodecanoate.

3. The water-sealing material for electrical wire according to claim 1 or 2, wherein the component (A) comprises a reaction product of polyester polyol, polyisocyanate, and (meth)acrylate containing a hydroxy group.

4. The water-sealing material for electrical wire according to any one of claims 1 to 3, wherein the component (B) comprises (meth)acrylates containing an alicyclic structure.

5. A water-sealing member obtained by curing the water-sealing material for electrical wire according to any one of claims 1 to 4.

6. An electrical wire comprising a conductor and a coating material for coating the conductor, wherein an exposed part of conductor obtained by removing a part of the coating material from the conductor is water-sealed by the water-sealing member according to claim 5.

7. A water-sealed cable comprising plural electrical wires each comprising a conductor and a coating material for coating the conductor, wherein a gap between the plural electrical wires is water-sealed by the water-sealing member according to claim 5.

8. A method for water-sealing of an exposed part of a conductor obtained by removing a part of coating material from an electrical wire comprising a conductor and the coating material for coating the conductor, the method comprising:
a step of adhering water-sealing material wherein the water-sealing material for electrical wire according to any one of claims 1 to 4 is applied to the exposed part of conductor; and
a step of curing water-sealing material by irradiation on an adhered region of the water-sealing material for electrical wire in the electrical wire.

9. A method for water-sealing of a gap between plural electrical wires in a cable comprising plural electrical wires each having a conductor and a coating material for coating the conductor, the method comprising:
a step of filling water-sealing material wherein the gap between electrical wires is filled with the electrical wire water-sealing material according to any one of claims 1 to 4; and
a step of curing the water-sealing material by irradiation on a filled region of the water-sealing material for electrical wire in the cable.

## Patentansprüche

1. Wasserabdichtmaterial von der strahlungshärtenden Art für elektrischen Draht, zum Wasserabdichten
eines exponierten Teils eines Leiters, der durch Entfernen eines Teils eines Beschichtungsmaterials von einem elektrischen Draht umfassend einen Leiter und das Beschichtungsmaterial zum Beschichten des Leiters erhalten ist, oder
eines Freiraums zwischen mehreren elektrischen Drähten in einem Kabel umfassend mehrere elektrische Drähte jeweils mit einem Leiter und einem Beschichtungsmaterial zum Beschichten des Leiters,
umfassend die folgenden Bestandteile (A) bis (D):
(A) 5 bis 50 Masse-% eines Urethan(meth)acrylats, das ein Produkt enthält, erhalten aus einer Reaktion zwischen Polyetherpolyol, Polyisocyanat und (Meth)acrylat, das eine Hydroxylgruppe enthält;
(B) 30 bis 90 Masse-% einer Verbindung mit einer ethylenisch ungesättigten Gruppe;
(C) 0,01 bis 10 Masse-% eines Strahlungspolymerisationsinitiators,
(D) 0,1 bis 5 Masse-% eines organischen Peroxids, und
(F) 10 Masse-% oder weniger eines Bestandteils (F), welcher eine Verbindung mit zwei oder mehr ethylenisch ungesättigten Gruppen ist, die sich von dem Bestandteil (A) unterscheidet,
basierend auf 100 Masse-% des gesamten Volumens der Zusammensetzung.

2. Wasserabdichtmaterial für elektrischen Draht nach Anspruch 1, wobei der Bestandteil (D) ein oder mehrere Elemente ausgewählt aus der Gruppe bestehend aus Cumenhydroperoxid, tertiär-Butylperoxid, Methylaceto-acetat-peroxid, Methylcyclohexanonperoxid, di-Isopropylperoxid, Dicumylperoxid, di-Isopropylperoxycarbonat, Benzoylperoxid und tertiär-Butylperoxyneodecanoat ist.

3. Wasserabdichtmaterial für elektrischen Draht nach Anspruch 1 oder 2, wobei der Bestandteil (A) ein Reaktionsprodukt aus Polyesterpolyol, Polyisocyanat und (Meth)acrylat, das eine Hydroxylgruppe enthält, umfasst.

4. Wasserabdichtmaterial für elektrischen Draht nach einem der Ansprüche 1 bis 3, wobei der Bestandteil (B) (Meth)acrylate umfasst, die eine alizyklische Struktur enthalten.

5. Wasserabdichtelement, das durch Härten des Wasserabdichtmaterials für elektrischen Draht nach einem der Ansprüche 1 bis 4 erhalten ist.

6. Elektrischer Draht, umfassend einen Leiter und ein Überzugsmaterial zum Beschichten des Leiters, wobei ein exponierter Teil des Leiters, der durch Entfernen eines Teils des Beschichtungsmaterials von dem Leiter erhalten ist, durch das Wasserabdichtelement nach Anspruch 5 gegen Wasser abgedichtet ist.

7. Wasserabgedichtetes Kabel, umfassend eine Mehrzahl elektrischer Drähte, die jeweils einen Leiter und ein Überzugsmaterial zum Beschichten des Leiters umfassen, wobei ein Freiraum zwischen den mehreren elektrischen Drähten durch das Wasserabdichtelement nach Anspruch 5 gegen Wasser abgedichtet ist.

8. Verfahren zum Wasserabdichten eines exponierten Teils eines Leiters, der durch Entfernen eines Teils eines Überzugsmaterials von einem elektrischen Draht, umfassend einen Leiter und ein Überzugsmaterial zum Beschichten des Leiters, erhalten ist, wobei das Verfahren umfasst:
einen Schritt des Anhaftens eines Wasserabdichtmaterials, wobei das Wasserabdichtmaterial für elektrischen Draht nach einem der Ansprüche 1 bis 4 auf den exponierten Leiterteil aufgebracht wird; und
einen Schritt des Härtens des Wasserabdichtmaterials durch Bestrahlung eines Anhaftbereichs des Wasserabdichtmaterials für elektrischen Draht in dem elektrischen Draht.

9. Verfahren zum Wasserabdichten eines Freiraums zwischen mehreren elektrischen Drähten in einem Kabel, das mehrere elektrische Drähte mit jeweils einem Leiter und einem Überzugsmaterial zum Beschichten des Leiters umfasst, wobei das Verfahren umfasst:
einen Schritt des Verfüllens eines Wasserabdichtmaterials, wobei der Freiraum zwischen elektrischen Drähten mit dem elektrischen Draht-Wasserabdichtmaterial nach einem der Ansprüche 1 bis 4 aufgefüllt wird; und
einen Schritt des Härtens des Wasserabdichtmaterials durch Bestrahlung eines aufgefüllten Bereichs des Wasserabdichtmaterials für elektrischen Draht in dem Kabel.

## Revendications

1. Matériau d'étanchéité à l'eau de type durcissable par rayonnement pour fil électrique, permettant de rendre étanche à l'eau
une partie exposée d'un conducteur obtenue par enlèvement d'une partie du matériau de gaine d'un fil électrique constitué d'un conducteur et du matériau de gaine destiné à gainer le conducteur ou
un espace entre plusieurs fils électriques dans un câble comprenant plusieurs fils électriques constitués chacun d'un conducteur et d'un matériau de gaine destiné à gainer le conducteur,
comprenant les composants (A) à (D) suivants :
(A) de 5 à 50 % en poids d'un (méth)acrylate d'uréthanne contenant un produit obtenu par réaction entre un polyéther polyol, un polyisocyanate, et un (méth)acrylate contenant un groupe hydroxy ;
(B) de 30 à 90 % en poids d'un composé ayant un groupe à insaturation éthylénique ;
(C) de 0,01 à 10 % en poids d'un amorceur de polymérisation par rayonnement,
(D) de 0,1 à 5 % en poids d'un peroxyde organique, et
(F) 10 % en poids ou moins d'un composant (F) qui est un composé ayant deux groupes à insaturation éthylénique ou plus, autres que le composant (A),
sur la base de 100 % en poids du volume total de la composition.

2. Matériau d'étanchéité à l'eau pour fil électrique selon la revendication 1, dans lequel le composant (D) est un ou plusieurs membres du groupe constitué par l'hydroperoxyde de cumène, le peroxyde de butyle tertiaire, le peroxyde d'acéto-acétate de méthyle, le peroxyde de méthyl-cyclohexanone, le peroxyde de di-isopropyle, le peroxyde de dicumyle, le carbonate de peroxyde de di-isopropyle, le peroxyde de benzoyle, et le néodécanoate de peroxyde de butyle tertiaire.

3. Matériau d'étanchéité à l'eau pour fil électrique selon la revendication 1 ou 2, dans lequel le composant (A) comprend le produit de réaction d'un polyester polyol, d'un polyisocyanate, et d'un (méth)acrylate contenant un groupe hydroxy.

4. Matériau d'étanchéité à l'eau pour fil électrique selon l'une quelconque des revendications 1 à 3, dans lequel le composant (B) comprend des (méth)acrylates contenant une structure alicyclique.

5. Elément d'étanchéité à l'eau obtenu par durcissement du matériau d'étanchéité à l'eau pour fil électrique selon l'une quelconque des revendications 1 à 4.

6. Fil électrique constitué d'un conducteur et d'un matériau de gaine destiné à gainer le conducteur, dans lequel une partie exposée du conducteur obtenue par enlèvement d'une partie du matériau de gaine du conducteur est rendue étanche à l'eau par l'élément d'étanchéité à l'eau selon la revendication 5.

7. Câble étanche à l'eau comprenant plusieurs fils électriques constitués chacun d'un conducteur et d'un matériau de gaine destiné à gainer le conducteur, dans lequel un espace entre les multiples fils électriques est rendu étanche à l'eau par l'élément d'étanchéité à l'eau selon la revendication 5.

8. Procédé permettant de rendre étanche à l'eau une partie exposée d'un conducteur obtenue par enlèvement d'une partie du matériau de gaine d'un fil électrique constitué d'un conducteur et du matériau de gaine destiné à gainer le conducteur, le procédé comprenant :
une étape d'adhérence du matériau d'étanchéité à l'eau dans laquelle le matériau d'étanchéité à l'eau pour fil électrique selon l'une quelconque des revendications 1 à 4 est appliqué à la partie exposée du conducteur ; et
une étape de durcissement du matériau d'étanchéité à l'eau par application d'un rayonnement sur une région où adhère le matériau d'étanchéité à l'eau pour fil électrique dans le fil électrique.

9. Procédé permettant de rendre étanche à l'eau un espace entre plusieurs fils électriques dans un câble comprenant plusieurs fils électriques constitués chacun d'un conducteur et d'un matériau de gaine destiné à gainer le conducteur, le procédé comprenant :
une étape de remplissage de matériau d'étanchéité à l'eau dans laquelle l'espace entre les fils électriques est rempli avec le matériau d'étanchéité à l'eau pour fil électrique selon l'une quelconque des revendications 1 à 4 ; et
une étape de durcissement du matériau d'étanchéité à l'eau par application d'un rayonnement sur une région remplie par le matériau d'étanchéité à l'eau pour fil électrique dans le câble.
